# EUROPÄISCHE PATENTSCHRIFT

(11) **EP 2 756 264 B1**
(45) Veröffentlichungstag und Bekanntmachung des Hinweises auf die Patenterteilung: **27.01.2021**
(21) Anmeldenummer: 12756751.9
(22) Anmeldetag: 12.09.2012
(51) Int. Cl.: G01C 21/20

(54) **VERFAHREN ZUM BESTIMMEN VON LAGEDATEN EINES FAHRZEUGES**
METHOD FOR DETERMINING POSITION DATA OF A VEHICLE
PROCÉDÉ POUR DÉTERMINER DES DONNÉES DE LOCALISATION D'UN VÉHICULE

(30) Priorität: 12.09.2011 DE 102011082532
(43) Veröffentlichungstag der Anmeldung: 23.07.2014
(73) Patentinhaber: Continental Teves AG & Co. OHG, 60488 Frankfurt am Main (DE)
(72) Erfinder: STÄHLIN, Ulrich, 65760 Eschborn (DE); RINK, Klaus, Rodenbach 63517 (DE); GÜNTHNER, Stefan, 60489 Frankfurt (DE)
(74) Vertreter: Wagner, Philipp
(86) Internationale Anmeldenummer: PCT/EP2012/067862
(87) Internationale Veröffentlichungsnummer: WO 2013/037840

(56) Entgegenhaltungen:
- US-A1- 2008 154 495
- US-A1- 2009 228 204

## Beschreibung

Die Erfindung betrifft ein Verfahren zum Bestimmen von Lagedaten eines Fahrzeuges, eine Steuervorrichtung zur Durchführung des Verfahrens und ein Fahrzeug mit der Steuervorrichtung.

Aus der DE 10 2006 029 148 A1 ist ein sogenannter Strapdown-Algorithmus bekannt, der Lagedaten eines Fahrzeuges basierend auf Positionsdaten und Fahrdynamikdaten bestimmt.

Unter den Lagedaten eines Fahrzeuges sollen nachstehend alle die Position des Fahrzeuges in einem Raum beeinflussenden Daten verstanden werden. Unter diese Daten fallen damit die Positionsdaten des Fahrzeuges aber auch die Fahrdynamikdaten des Fahrzeuges. Unter den Fahrdynamikdaten sollen alle Daten verstanden werden, die die Bewegung des Fahrzeuges beschreiben.

In der DE 10 2006 029 148 A1 ist offenbart, dass zur Durchführung derartiger die Lagedaten eines Fahrzeuges bestimmenden Verfahren sogenannte Initialdaten notwendig sind, die nachstehend als externer Anker bezeichnet werden sollen.

Die US 2008/0154495 A1 beschreibt eine Methode zur Lokalisierung eines Fahrzeugs mittels Markern, wie beispielsweise auf Straßen aufgebrachte Barcodes, RFID-Marker, Reflektoren oder Signaturen, und Abgleich mit einer gespeicherten Datenbasis unabhängig von GPS.

Es ist Aufgabe der Erfindung, ein verbessertes Verfahren zur Bestimmung von Lagedaten eines Fahrzeuges anzugeben.

Die Aufgabe wird durch die Merkmale der unabhängigen Ansprüche gelöst. Bevorzugte Weiterbildungen sind Gegenstand der abhängigen Ansprüche.

Die Erfindung umfasst die im beigefügten Anspruch 1 genannten Schritte.

Dem angegebenen Verfahren liegt die Überlegung zugrunde, dass der eingangs genannte externe Anker aus einem sogenannten Global Positioning System-Signal, kurz GPS-Signal genannt, abgeleitet werden könnte. Dieser externe Anker könnte dann als Grundlage herangezogen werden, im Fahrzeug entweder andere Daten zu präzisieren oder sogar neue Daten zu schaffen. Ist beispielsweise aufgrund des GPS-Signals eine absolute Lage bekannt, könnte beispielsweise unter Zuhilfenahme der Inertialsensoren die Ausgabe der Raddrehzahlsensoren überprüft und somit abgesichtert werden. Alternativ oder zusätzlich könnte mit den Inertialsensoren die absolute Lage des Fahrzeuges auch dann weitergeführt werden, wenn das GPS-Signal beispielsweise unter einem Tunnel ausgefallen ist, um so beispielsweise neue Daten zu schaffen.

Im Rahmen des angegebenen Verfahrens wird jedoch erkannt, dass in immer mehr Fahrzeugen Umfeldsensoren verbaut werden, aus denen sich ebenfalls derartige externe Anker ableiten lassen. Diese Umfeldsensoren werden im Fahrzeug aus Sicherheitsgründen oder zu Komfortzwecken verwendet, und könnten die Präzision der eingangs genannten Lagedaten deutlich steigern, denn mit diesen Umfeldsensoren wäre es möglich, Objekte in der Umgebung des Fahrzeuges zu erkennen und teilweise zu klassifizieren.

Aus den Umfeldsensoren können nun zusätzlich zum GPS-Signal externe Anker abgeleitet werden, die insbesondere verglichen mit dem GPS-Signal selbst mit einer viel größeren Genauigkeit erfasst werden können, so dass die oben genannte Präzision der vorhandenen Daten oder die Schaffung der neuen Daten mit einer höheren Qualität erfolgen könnte.

Die Anzahl der verwendeten Objekte ist dabei zwar beliebig wählbar, wobei jedoch die Qualität der zu präzisierenden Daten und/oder der neuen Daten mit der Anzahl der verwendeten Objekte erhöht wird.

Durch das angegebene Verfahren wird damit die Qualität der Lagedaten des Fahrzeuges in Form der Positionsdaten und/oder der Fahrdynamikdaten des Fahrzeuges beispielsweise hinsichtlich der Verlässlichkeit gesteigert.

Das Filtern kann dabei eine reine Mittelwertbildung ohne weitere Berücksichtigungen anderer Faktoren wie Rauschen umfassen. Soll dieses mit berücksichtigt werden, käme ein Zustandsbeobachter oder ein Kalman-Filter als Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt.

Das angegebene Verfahren umfasst auch den Schritt Erfassen einer Ausdehnung des stillstehenden Objektes zum Messen des Abstandes. Dieser Weiterbildung liegt die Überlegung zugrunde, dass nicht jedes stillstehende Objekt als externer Anker geeignet ist. Diese stillstehenden Objekte können durch die Erfassung der Ausdehnung bestimmt und dann zur Verwendung bei der Bestimmung des externen Ankers ausgeschlossen werden.

Die Ausdehnung kann alle drei Raumrichtungen umfassen, wobei nicht in allen Raumrichtungen die Ausdehnung einen Einfluss auf die Verwendbarkeit bei der Bestimmung des externen Ankers hat. So ist zum Beispiel die Höhe der stillstehenden Objekte für die Bestimmung des externen Ankers unerheblich.

Somit wird im Rahmen des angegebenen Verfahrens der wenigstens eine Abstand in einer Richtung von 90° zur Fahrtrichtung des Fahrzeuges oder in einer Richtung in Fahrtrichtung des Fahrzeuges gemessen, wenn die Ausdehnung des stillstehenden Objektes einen vorbestimmten Wert überschreitet. Dieser Weiterbildung liegt die Überlegung zugrunde, dass zur Bestimmung bestimmter Positionsinformationen, wie beispielsweise die Erfassung einer Fahrspur des Fahrzeuges oder der Abstand zu einer nächsten Abbiegung nur ganz bestimmte räumliche Richtungen notwendig sind, und dass der externe Anker dann nur für diese räumlichen Richtungen der geforderten Genauigkeit genügen muss. Daher kann sich beispielsweise eine sich vergleichsweise lang erstreckende Wand an einer Straße noch als ausreichende Referenz zur Bestimmung eines externen Ankers erweisen, mit dem die Fahrspur des Fahrzeuges auf der Straße ausreichend genau bestimmt werden kann.

In einer anderen Weiterbildung umfasst das angegebene Verfahren die Schritte:
- Erfassen wenigstens eines weiteren Abstandes,
- Triangulieren des wenigstens einen Abstandes und des wenigstens einen weiteren Abstandes, und
- Filtern der Fahrdynamikdaten basierend auf dem triangulierten wenigstens einen Abstand und dem wenigstens einen weiteren Abstand.

Das heißt, dass der externe Anker basierend auf einer Triangulation mehrerer Abstände bestimmt werden kann, die über die Zeit erfasst werden. Auf diese Weise kann die Güte des externen Ankers und damit die Qualität der zu präzisierenden Daten und/oder der neuen Daten gesteigert werden.

In einer noch anderen Weiterbildung umfasst das angegebene Verfahren den Schritt Verwerfen des erfassten wenigstens einen Abstandes, wenn ein Fehler des erfassten wenigstens einen Abstandes einen vorbestimmten Wert überschreitet. Dieser Weiterbildung liegt die Überlegung zugrunde, dass beispielsweise Abstandssensoren die zur Bestimmung des externen Ankers herangezogenen Abstände mit einer von der Entfernung abhängigen Genauigkeit messen. Wird beispielsweise ein Abstand gemessen und die Toleranz des gemessenen Abstandes führt zu einer Toleranz des externen Ankers, die die Toleranz des mit dem GPS-Signal bestimmten Ankers überschreitet, so kann der entsprechend gemessene Abstand verworfen werden, da er keine Zusatzinformationen liefert.

In einer alternativen Weiterbildung des angegebenen Verfahrens umfassen die Fahrdynamikdaten eine relative Geschwindigkeit des Fahrzeuges. Im Einzelnen kann der externe Anker dabei basierend auf der relativen Geschwindigkeit des Fahrzeuges bestimmt werden, diese relative Geschwindigkeit beispielsweise bei der Triangulation berücksichtigt werden kann.

In einer anderen Weiterbildung des angegebenen Verfahrens umfasst das Filtern der Fahrdynamikdaten basierend auf dem erfassten Abstand eine Plausibilisierung der der Fahrdynamikdaten basierend auf dem erfassten Abstand und/oder eine Präzision der Fahrdynamikdaten basierend auf dem erfassten Abstand.

In einer besonderen Weiterbildung wird der wenigstens eine Abstand mit einer Kamera oder einem Abstandssensor erfasst. Die Kamera kann im Fahrzeug beispielsweise Funktionen wie Lane Departure Warning, Verkehrszeichenerkennung oder High Beam Assistent ermöglichen. Als Abstandssensoren können beispielsweise Radarsensoren, laserbasierte Abstandssensoren, wie CV-Sensoren, Stereokamera oder Ultraschallsensoren verwendet werden. Insbesondere die Ultraschallsensoren in Form von sogenannten "Parkpiepsern" finden sich heutzutage in modernen Fahrzeugen standardmäßig, so dass das angegebene Verfahren mit einem Minimum an zusätzlicher Hardware kostengünstig umgesetzt werden kann.

In einer bevorzugten Weiterbildung ist das stillstehende Objekt ein Pfosten, eine Wand, ein Bordstein, ein parkendes Auto oder ein erkennbares Merkmal in einem anderen stillstehenden Objekt. Das erkennbare Merkmal in einem anderen stillstehenden Objekt kann beispielsweise ein Anfang oder Ende einer Wand, eine markante Formänderung oder eine Farbänderung sein.

Gemäß einem weiteren Aspekt der Erfindung ist eine Steuervorrichtung eingerichtet, ein Verfahren nach einem der vorstehenden Ansprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

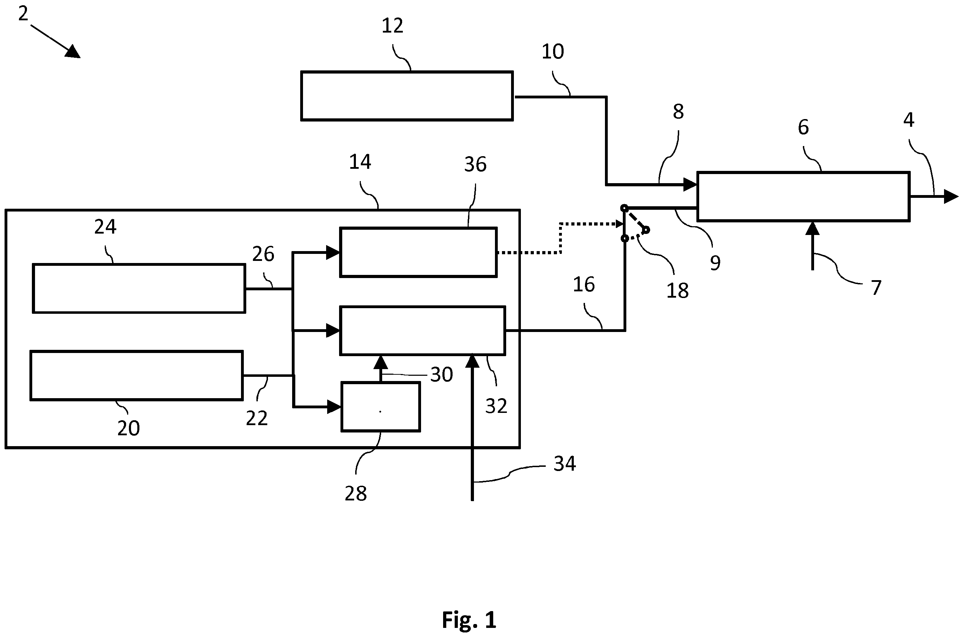

Fig. 1 eine Prinzipdarstellung einer Vorrichtung zum Bestimmen von Lagedaten eines Fahrzeuges zeigt.

Es wird auf Fig. 1 Bezug genommen, die eine Vorrichtung 2 zum Bestimmen von Lagedaten 4 eines nicht weiter dargestellten Fahrzeuges zeigt.

Die Lagedaten 4 werden in einer Lagebestimmungseinrichtung 6 bestimmt, die in der vorliegenden Ausführung als Recheneinheit ausgeführt ist, die u.a. einen dem Fachmann bekannten Strapdown-Algorithmus ausführt.

Die Lagebestimmungseinrichtung 6 bestimmt die Lagedaten 4 des Fahrzeuges basierend auf einer Initialposition 8 des nicht weiter dargestellten Fahrzeuges, und aktualisiert diese basierend auf Fahrdynamikdaten 7. Die Initialposition 8 soll nachstehend als sogenannter externer Anker 8 bezeichnet werden, der vor der Bestimmung der Lagedaten 4 bestimmt werden muss.

Der externe Anker 8 kommt in der vorliegenden Ausführung aus einem GPS-Signal 10, das aus einem GPS-Gerät 12 ausgegeben wurde. Zusätzlich kann optional noch ein zusätzlicher externer Anker 9 aus einem lokalen Messsignal 16 hergeleitet werden, das aus einer lokalen Messeinrichtung 14 ausgegeben wird. Die Zuschaltung des optionalen externen Ankers 9 erfolgt in der vorliegenden Ausführung der Einfachheit halber über einen Umschalter 18, worauf an späterer Stelle näher eingegangen wird.

Da GPS-Signale dem Fachmann hinreichend bekannt sind, soll auf eine nähere Darstellung des GPS-Signals 10 der Kürze halber verzichtet werden.

Die lokale Messeinrichtung 14 empfängt von einer Kamera 20 ein Bild 22 und von einem Abstandsensor 24 ein Abstandssignal 26.

Das Bild 22 wird in der vorliegenden Ausführung einer Objekterkennungseinrichtung 28 zugeführt, die in der Umgebung des nicht näher dargestellten Fahrzeugs geeignete Objekte 30 zur Bestimmung des externen Ankers 8 als Initialposition für die Lagebestimmungseinrichtung 6 bestimmt. Diese Objekte 30 können beispielsweise Wände, Pfosten, Bordsteine oder parkende Fahrzeuge in der Nähe des Fahrzeuges auf der Straße sein. Als Objekte 30 kann aber auch auf den zuvor genannten Objekten nach Formänderungen, Farbänderungen, Kanten oder anderen geeigneten Merkmalen gesucht werden, die für die Bestimmung des externen Ankers 8 geeignet sind.

Das Bild 22 wird ferner zusammen mit den gefundenen Objekten 30 und den vom Abstandssensor 24 gemessenen Abständen 26 einer Berechnungseinrichtung 32 zugeführt, die das als externer Anker 8 geeignete lokale Messsignal 16 berechnet. Dazu kann die Berechnungseinrichtung beispielsweise den Abstand 26 des nicht dargestellten Fahrzeuges zu dem identifizierten Objekt 30 über die Zeit messen und zusammen mit einem aus der Geschwindigkeit 34 des Fahrzeuges berechneten Weg in einer dem Fachmann bekannten Weise triangulieren.

Das berechnete lokale Messsignal 16, das als zusätzlicher externer Anker 9 dienen soll wird abschließend an den Umschalter 18 ausgegeben.

Der Umschalter 18 wird abhängig von einer Toleranz des lokalen Messsignals 16 eingestellt. Diese ist von der Toleranz des gemessenen Abstandes 26 abhängig. Je größer dieser Abstand 26 ist, desto größer ist bedingt durch das jeweilige Messprinzip seine Toleranz. Die Toleranz des Abstandes 26 und damit die Toleranz des lokalen Messsignals 16 wird in einer Toleranzauswerteeinrichtung 36 bestimmt. Überschreitet die Toleranz des lokalen Messsignals 16 einen bestimmten Schwellwert, wo wird das lokale Messsignal 18 nicht als zusätzlicher externer Anker 9 mit dem Umschalter 18 ausgewählt. Anderenfalls wird das lokale Messsignal 16 als zusätzlicher externer Anker 9 der Lagebestimmungseinrichtung 6 zugeführt.

Es sei an dieser Stelle erwähnt, dass die Lagebestimmung basierend auf dem zusätzlichen externen Anker 9 nur als Beispiel dafür dienen soll, wozu dieser eingesetzt werden könnte. Letztendlich kann dieser für jede erdenkliche Filterung herangezogen werden. So können mit dem zusätzlichen externen Anker vorhandene im Fahrzeug Sensordaten plausibilisiert, präzisiert, korrigiert oder von einem Rauschen befreit werden. Auch können mit dem zusätzlichen externen Anker neue Daten generiert werden. In der WO 2011/ 098 333 A1 wurde beschrieben, wie in einem Fahrzeug verschiedene Sensorgrößen herangezogen werden können, um bereits vorhandene Sensorgrößen zu verbessern oder neue Sensorgrößen zu generieren. Der zusätzliche externe Anker 9 stellt nichts anderes als eine neue zusätzliche Sensorgröße dar, mit der sich die in der genannten Druckschrift vorgeschlagenen Möglichkeiten ausweiten lassen.

## Patentansprüche

1. Verfahren zum Bestimmen von Lagedaten (4) eines Fahrzeuges, umfassend:
- Messen von Fahrdynamikdaten (7) des Fahrzeuges,
- Messen wenigstens eines Abstandes (26) des Fahrzeuges zu einem stillstehenden Objekt,
- Filtern der Fahrdynamikdaten (7) basierend auf dem erfassten Abstand (26), und
- Aktualisieren der Lagedaten basierend auf den gefilterten Fahrdynamikdaten, **gekennzeichnet durch**
- Erfassen einer Ausdehnung (20) des stillstehenden Objektes zum Messen des Abstandes (26), wobei wenn die Ausdehnung (26) des stillstehenden Objektes einen vorbestimmten Wert überschreitet, wird der wenigstens eine Abstand (26) in einer Richtung von 90° zur Fahrtrichtung des Fahrzeuges oder in Fahrtrichtung des Fahrzeuges gemessen.

2. Verfahren nach einem der vorstehenden Ansprüche, umfassend:
- Erfassen wenigstens eines weiteren Abstandes,
- Triangulieren des wenigstens einen Abstandes (26) und des wenigstens einen weiteren Abstandes, und
- Filtern der Fahrdynamikdaten (7) basierend auf dem triangulierten wenigstens einen Abstand (26) und dem wenigstens einen weiteren Abstand.

3. Verfahren nach einem der vorstehenden Ansprüche, umfassend:
- Verwerfen des erfassten wenigstens einen Abstandes (26), wenn ein Fehler des erfassten wenigstens einen Abstandes (26) einen vorbestimmten Wert überschreitet.

4. Verfahren nach einem der vorstehenden Ansprüche, wobei das Filtern der Fahrdynamikdaten (7) basierend auf dem erfassten Abstand (26) eine Plausibilisierung der Fahrdynamikdaten (7) basierend auf dem erfassten Abstand (26) und/oder eine Präzision der Fahrdynamikdaten (7) basierend auf dem erfassten Abstand (26) umfasst.

5. Verfahren nach einem der vorstehenden Ansprüche, umfassend Erfassen des wenigstens einen Abstandes mit einer Kamera (20) und/oder einem Abstandssensor (24).

6. Verfahren nach einem der vorstehenden Ansprüche, wobei das stillstehende Objekt ein Pfosten, eine Wand, ein Bordstein, ein parkendes Auto oder ein erkennbares Merkmal in einem anderen stillstehenden Objekt ist.

7. Steuervorrichtung (2), die eingerichtet ist, ein Verfahren nach einem der vorstehenden Ansprüche durchzuführen.

8. Fahrzeug umfassend eine Steuervorrichtung (2) nach Anspruch 7.

## Claims

1. A method for determining position data (4) of a vehicle, comprising:
- measuring driving dynamic data (7) of the vehicle,
- measuring at least one distance (26) of the vehicle from a stationary object,
- filtering the driving dynamic data (7) based on the detected distance (26), and
- updating the position data based on the filtered driving dynamic data, **characterized by**
- detecting an expansion (20) of the stationary object to measure the distance (26), wherein, when the expansion (26) of the stationary object exceeds a predetermined value, the at least one distance (26) is measured in a direction positioned at 90° to the driving direction of the vehicle or in the driving direction of the vehicle.

2. The method according to any one of the preceding claims, comprising:
- detecting at least one further distance,
- triangulating the at least one distance (26) and the at least one further distance, and
- filtering the driving dynamic data (7) based on the triangulated at least one distance (26) and on the at least one further distance.

3. The method according to any one of the preceding claims, comprising:
- discarding the detected at least one distance (26) when an error of the detected at least one distance (26) exceeds a predetermined value.

4. The method according to any one of the preceding claims, wherein the filtering of the driving dynamic data (7) based on the detected distance (26) comprises a plausibility check of the driving dynamic data (7) based on the detected distance (26) and/or a precision of the driving dynamic data (7) based on the detected distance (26).

5. The method according to any one of the preceding claims, comprising detecting the at least one distance with a camera (20) and/or a distance sensor (24).

6. The method according to any one of the preceding claims, wherein the stationary object is a post, a wall, a curb, a parked car or a recognizable characteristic in another stationary object.

7. A control device (2) arranged to perform a method according to any one of the preceding claims.

8. A vehicle comprising a control device (2) according to Claim 7.

## Revendications

1. Procédé pour la détermination de données de localisation (4) d'un véhicule, comprenant :
- la mesure des données de dynamique de conduite (7) du véhicule,
- la mesure d'au moins une distance (26) entre le véhicule et un objet immobile,
- le filtrage des données de dynamique de conduite (7) sur la base de la distance (26) détectée, et
- l'actualisation des données de localisation sur la base des données de dynamique de conduite filtrées, **caractérisé par**
- la détection d'une extension (20) de l'objet immobile pour la mesure de la distance (26),
l'au moins une distance (26) étant mesurée dans une direction de 90° par rapport à la direction de conduite du véhicule ou dans la direction de conduite du véhicule lorsque l'extension (26) de l'objet immobile dépasse une valeur prédéterminée.

2. Procédé selon l'une des revendications précédentes, comprenant :
- la détection d'au moins une distance supplémentaire,
- la triangulation de l'au moins une distance (26) et de l'au moins une distance supplémentaire, et
- le filtrage des données de dynamique de conduite (7) sur la base de l'au moins une distance triangulée (26) et de l'au moins une distance supplémentaire.

3. Procédé selon l'une des revendications précédentes, comprenant :
- le rejet de l'au moins une distance (26) détectée lorsqu'une erreur de l'au moins une distance (26) détectée dépasse une valeur prédéterminée.

4. Procédé selon l'une des revendications précédentes, le filtrage des données de dynamique de conduite (7) basé sur la distance (26) détectée comprenant une plausibilisation des données de dynamique de conduite (7) sur la base de la distance (26) détectée et/ou une précision des données de dynamique de conduite (7) sur la base de la distance (26) détectée.

5. Procédé selon l'une des revendications précédentes, comprenant la détection de l'au moins une distance avec une caméra (20) et/ou un capteur de distance (24).

6. Procédé selon l'une des revendications précédentes, l'objet immobile étant un poteau, un mur, une bordure, une voiture garée ou une caractéristique reconnaissable dans un autre objet immobile.

7. Dispositif de commande (2), lequel est configuré pour exécuter un procédé selon l'une des revendications précédentes.

8. Véhicule comprenant un dispositif de commande (2) selon la revendication 7.
